# EUROPÄISCHE PATENTSCHRIFT

(11) **EP 3 001 200 B1**
(45) Veröffentlichungstag und Bekanntmachung des Hinweises auf die Patenterteilung: **12.09.2018**
(21) Anmeldenummer: 15155452.4
(22) Anmeldetag: 17.02.2015
(51) Int. Cl.: G01P 3/48, G01P 3/481, B61C 15/00, B60L 3/10, G01D 5/245

(54) **Inkrementaldrehgeber mit integrierter Rolliererkennung**
Incremental rotary encoder with integrated detection or torsional vibration
Encodeur incrémentiel à reconnaissance de vibrations de torsion intégrée

(30) Priorität: 29.09.2014 DE 102014219714
(43) Veröffentlichungstag der Anmeldung: 30.03.2016
(73) Patentinhaber: Baumer Hübner GmbH, 10589 Berlin (DE)
(72) Erfinder: Hiller, Bernhard, 13465 Berlin (DE); Hohl, Michael, 8405 Winterthur (CH)
(74) Vertreter: Strauss, Steffen

(56) Entgegenhaltungen:
- EP-A1- 0 913 694
- WO-A1-2014/114592
- DE-A1-102007 003 867
- US-A- 5 501 105
- US-A1- 2007 090 961
- US-A1- 2008 180 090

## Beschreibung

Die Erfindung betrifft einen an der Achse eines Schienenfahrzeugs montierbaren Inkrementaldrehgeber, mit einer Sensoreinheit zur Erzeugung von die Rotation der Achse repräsentierenden Rohsignalen, wobei eine Datenverarbeitungseinheit zur Erzeugung eines eine periodische Schwankung der Rohsignale repräsentierenden Rolliersignals und eines Inkrementalsignals aus den Rohsignalen sowie eine Ausgabeschnittstelle zur separaten Ausgabe des Rolliersignals und des Inkrementalsignals in dem Drehgeber integriert sind. Die Erfindung betrifft zudem ein Verfahren zur Erzeugung eines Rolliersignals in einem Inkrementaldrehgeber.

Inkrementaldrehgeber sind bekannt und werden insbesondere zur genauen Bestimmung von Drehzahlen verwendet. Üblicherweise besitzen Schienenfahrzeuge einen Inkrementaldrehgeber an wenigstens einer Achse, um die Drehzahl der Achse zu bestimmen. Bekannte Drehgeber besitzen in der Regel eine Scheibe mit Inkrementen, welche rotierend an einer Abtastplatte mit gewöhnlich vier Abtastfeldern vorbeigeführt werden Ob es sich hierbei um 4 Abtastfelder handelt ist nicht relevant auch nicht ob es sich um einen optischen Geber oder magnetischen Geber handelt. Die Spur mit den Inkrementen stellt die Maßverkörperung des Inkrementaldrehgebers dar. Eine Sensoreinheit des Inkrementaldrehgebers kann für jedes Abtastfeld einen Sensor aufweisen, der das durch die Scheibe und durch das jeweilige Abtastfeld empfangene Licht einer Lichtquelle empfängt und in ein elektrisches Signal umwandelt. Bekannte Inkrementaldrehgeber sind so ausgestaltet, dass auf diese Weise vier sinusförmige Signale gebildet werden. Es werden eigentlich nur ein Sinus- und ein Cosinus-Signal erzeugt, was durch differentielle Abtastung von jeweils 2 Fotodioden erfolgt. Beim magnetichen Geber werden die Magnetpole auf der Maßverkörperung (Scheibe mit Magnetmaterial am Umfang oder in axialer Richtung) mit MR- oder Hall-Sensoren abgetastet. Auch hier können sinus- und cosinusförmige Signalverläufe generiert werden. Aus diesen Signalen wird dann über geeignete Methoden ein Signal erzeugt, das wenigstens zwei Kanäle (A, B) aufweist, die elektrisch um 90° zueinander versetzt sind. Dabei kann durch die sogenannte Interpolation, womit die Unterteilung der Sin/Cos-Signalperiode in feinere Abschnitte gemeint ist, wesentlich mehr Rechteckperioden je Umdrehung erzeugt werden, als die Maßverkörperung Teilungen (Magnetpole oder Hell-Dunkelübergänge) aufweist.

Insbesondere bei Schienenfahrzeugen kann das Inkrementalsignal der Kanäle A und B nicht nur zur Bestimmung der aktuellen Drehzahl einer Achse verwendet werden, sondern auch um daraus ein Rollieren der Achse zu ermitteln. Unter Rollieren versteht man eine gegenphasige Drehschwingung der Radscheiben. Diese Erscheinung kann insbesondere bei hohen Antriebskräften oder hohen Bremskräften in Kombination mit großen Reibwerten zwischen den Rädern und den Fahrschienen auftreten, wenn der Reibwert örtlich verschieden ist. Dies kann zum unruhigen Lauf einer Achse führen, was sowohl die Sicherheit eines Schienenfahrzeugs gefährdet, als auch einen erhöhten Verschleiß der Achse, der Räder, der Radlager und dessen Presssitze und weiterer Komponenten zur Folge haben kann. Die Torsionsschwingung ist als periodische Schwankung der Drehung der Achse überlagert und ist damit sowohl in den Rohsignalen des Gebers als auch in den daraus erzeugten Inkrementalsignalen vorhanden. Im gegenwärtigen Stand der Technik wird das Rolliersignal, also ein Signal, das die Amplitude und/oder die Frequenz der Torsionsschwingung in der Achse, also der periodischen Schwankung der Drehzahl, angibt, aus dem Inkrementalsignal bestimmt. Diese Methode ist aufwendig, erfordert eine Reihe von Komponenten am Schienenfahrzeug und liefert zudem Ergebnisse, welche nur mit bedingt zufriedenstellender Genauigkeit das Rollieren einer Achse erkennen lassen. Der Grund für die teilweise unbefriedigende Erkennung des Rollierens liegt in einer zu geringen Auflösung der bislang eingesetzten Drehgeber. So kann das Rollieren mit den bestehenden Gebersystemen oft nur zu spät erkannt werden, da erst durch eine starke Filterung das berechnete Drehzahlsignal eine saubere Erkennung des Rollierens möglich macht.

Ein Drehgeber, bei dem ein hochauflösendes Signal aus Sinus- bzw. Kosinus-Rohsignalen erzeugt wird, ist beispielsweise aus US-A- 2008/180090 bekannt.

Es ist daher die Aufgabe der Erfindung, einen Drehgeber mit den eingangs genannten Merkmalen bereit zu stellen, für eine Rolliererkennung mit verbesserter Zuverlässigkeit im Sinne des sicheren und schnellen Erkennens des Rollieren.

Diese Aufgabe wird erfindungsgemäß dadurch gelöst, dass die Rohsignale in der Datenverarbeitungseinheit in wenigstens ein digitales Rohsignal, vorzugsweise ein die Position, Drehzahl oder Drehbeschleunigung der Achse des Schienenfahrzeugs repräsentierendes Signal, umwandelbar sind und dass wenigstens eine Signalverarbeitungseinheit zum Trennen des Rolliersignals vom digitalen Rohsignal (29) der Datenverarbeitungseinheit vorgesehen ist.

Die Erfindung löst die Aufgabe besonders vorteilhaft, da die Erzeugung des Rolliersignals direkt innerhalb des Drehgebers stattfindet, wodurch auf externe Komponenten bzw. Signalverarbeitung in Form von Hard- oder insbesondere Software zur Bestimmung des Rolliersignals aus den Inkrementalsignalen verzichtet werden kann. Zum anderen erlaubt die Erfindung die Erzeugung eines genaueren Rolliersignals als aus dem Stand der Technik bekannt.

Die Rohsignale des Drehgebers sind Sinus- und Cosinussignale, die durch optische oder magnetische Abtastung einer dazu passenden Maßverkörperung (Glasscheibe oder magnetisches Polrad) gewonnen werden. Aus den Sin/Cos-Signalen werden durch entsprechende Verfahren eine hochaufgelöste Position und daraus wiederum eine hochaufgelöste Drehzahl gewonnen. Anders als bei den üblicherweise verwendeten Inkrementalsignalen, die gegenüber der Anzahl der Teilung der Maßverkörperung (Strichzahl der Glasscheibe bzw. Anzahl der Magnetpole auf dem Polrad) nur eine um typischerweise den Faktor 4 bis 50 höhere Anzahl von Rechteckperioden je Umdrehung aufweisen, können mit der hochaufgelösten Position und Drehzahl, die aus den Rohsignalen berechnet wird, eine ungleich genauere und schnellere Rolliererkennung durchgeführt werden.

Das Rolliersignal kann beispielsweise analog sein und eine Spannung aufweisen, welche zur Amplitude der periodischen Schwankung proportional ist. Das Rolliersignal ist jedoch digital und enthält Angaben wenigstens über die Amplitude der periodischen Schwankung, bevorzugt Angaben über die Amplitude und die Frequenz der periodischen Schwankung.

Der Drehgeber kann auch als Untereinheit eines Absolutwertgebers realisiert sein. Da Absolutwertgeber ebenfalls wenigstens eine Codespur mit ausreichenden Inkrementen, vorzugsweise Sin/Cos-Perioden, aufweisen, kann auch ein Absolutwertgeber eine erfindungsgemäße Datenverarbeitungseinheit besitzen, welche aus dem Rohsignal ein Rolliersignal erzeugt.

Die erfindungsgemäße Lösung kann durch verschiedene, jeweils für sich vorteilhafte, beliebig miteinander kombinierbare Ausgestaltungen weiter verbessert werden. Auf diese Ausführungsformen und die mit ihnen verbundenen Vorteile ist im Folgenden eingegangen.

Um einen kompakten Aufbau zu ermöglichen, können die Sensoreinheit, die Datenverarbeitungseinheit und die Ausgabeschnittstelle eine Bauteilgruppe bilden. Diese Bauteilgruppe ist bevorzugt in einem gemeinsamen Gehäuse untergebracht.

Die Datenverarbeitungseinheit ist dazu ausgestaltet, das Rolliersignal als separates Signal bereitzustellen. Dadurch kann das Rolliersignal unabhängig von anderen ermittelten Signalen einer weiteren Verwendung zugeführt werden. Die Datenverarbeitungseinheit weist einen separaten Ausgang für das Rolliersignal auf. Dadurch kann das Rolliersignal auch elektrisch getrennt von anderen Signalen von der Datenverarbeitungseinheit ausgegeben werden. Es kann ferner wenigstens eine separate Leitung zur Übermittlung des Rolliersignals zwischen der Datenverarbeitungseinheit und der Ausgabeschnittstelle vorgesehen sein. Alternativ dazu kann das Rolliersignal auch durch Multiplexverfahren zusammen mit anderen Signalen auf einer Leitung übertragen werden.

Das Inkrementalsignal wird an einem vom Rolliersignal separaten Ausgang der Ausgabeschnittstelle bereitgestellt. Bevorzugt ist das Inkrementalsignal so abgreifbar, wie es im Stand der Technik bekannt ist. Insbesondere kann das Inkrementalsignal die Pulse der beiden 90° elektrisch zueinander versetzten Kanäle A und B beinhalten. Zusätzlich kann das Inkrementalsignal auch einen Kanal für einen Null-Index der Maßverkörperung aufweisen. Ebenso ist es möglich, dass das Inkrementalsignal nicht nur die Kanäle A, B und den Nullindex beinhaltet, sondern zusätzlich invertierte Kanäle A', B' und einen invertierten Kanal für den Nullindex.

Die Ausgabeschnittstelle hat wenigstens einen separaten Ausgang zur Ausgabe des Rolliersignals. Das Rolliersignal kann dadurch direkt an der Ausgabeschnittstelle des Inkrementaldrehgebers abgegriffen und ausgelesen werden.

Die Ausgabeschnittstelle kann beispielsweise eine Schnittstelle sein, die sowohl das Rolliersignal als auch ein Inkrementalsignal des Drehgebers zur Verfügung stellt. Die Ausgabeschnittstelle kann dazu geeignete bekannte Techniken verwenden. Das Rolliersignal kann zum Beispiel bitcodiert parallel übertragen werden. Alternativ kann es auch über eine serielle Schnittstelle oder über ein Feldbusinterface übertragbar sein.

Das Inkrementalsignal weist bevorzugt immer noch die periodische Schwankung der Achse auf. Es kann also aus dem Inkrementalsignal wie im Stand der Technik bekannt ebenfalls das Rolliersignal, wenn auch mit schlechterer Qualität ermittelt werden. In diesem Fall könnte das aus dem Inkrementalsignal ermittelte Rolliersignal mit dem direkt vom Drehgeber ausgegebenen Rolliersignal verglichen werden, wodurch eine zusätzliche Sicherheit gegeben sein könnte. Bevorzugt wird jedoch nur das Rolliersignal des Drehgebers verwendet, da dieses eine höhere Genauigkeit besitzt und der Vorteil der Erfindung gerade darin besteht, auf zusätzliche Komponenten in Form von Hard- und/oder Software verzichten zu können.

Zur Auswertung der Rohsignale sind diese in der Datenverarbeitungseinheit in ein digitalisiertes Rohsignal umwandelbar, welches wenigstens einem Trennglied der Datenverarbeitungseinheit zuführbar ist. Das digitalisierte Rohsignal kann die Information der Rohsignale gebündelt beinhalten. Beispielsweise kann das digitalisierte Rohsignal aus einer Pulsfolge gebildet sein, wobei jeder Puls einer Sinusschwingung von jedem Sensorkanal entspricht. Das digitalisierte Rohsignal fasst also die Rohsignale zusammen, ohne dabei an Genauigkeit zu verlieren.

Die Datenverarbeitungseinheit kann ein Auswertungsglied aufweisen, das dazu ausgestaltet ist, aus dem digitalisierten Rohsignal das Inkrementalsignal zu erzeugen. Die Datenverarbeitungseinheit bildet also aus den Rohsignalen zunächst ein digitalisiertes Rohsignal, welches dann zur weiteren Auswertung genutzt wird. Aus dem digitalisierten Rohsignal wird im Trennglied das Rolliersignal und das Inkrementalsignal separiert. Um einen besonders kompakten Aufbau zu ermöglichen, kann die Datenverarbeitungseinheit aus einem integrierten Schaltkreis gebildet sein, der wenigstens das Trennglied und das Auswertungsglied beinhaltet. Trennglied und Auswertungsglied können zum Beispiel in einem gemeinsamen Chip realisiert sein. Alternativ dazu kann das Auswertungsglied als separater Schaltkreis in der Datenverarbeitungseinheit vorhanden sein.

Zur Filterung der periodischen Schwankung aus den Rohsignalen oder aus dem digitalisierten Rohsignal kann das Trennglied einen Tiefpass aufweisen. Die periodische Schwankung ist in der Regel sehr viel niedriger als Frequenz der Rohsignale. Durch einen Tiefpass kann daher die periodische Schwankung von den Rohsignalen getrennt werden. Um eine besonders genaue Erfassung der periodischen Schwankung zu erreichen, kann das Trennglied einen Bandpass aufweisen. Dieser kann schmalbandig gewählt werden, um die periodische Schwankung herauszufiltern. Besonders bevorzugt kann das Trennglied einen Tiefpass mit einem nachgeschalteten Bandpass aufweisen. Dadurch kann die periodische Schwankung besonders sauber aus den Rohsignalen oder aus dem digitalisierten Rohsignal gefiltert werden. Aus der dadurch gefilterten periodischen Schwankung kann dann das Rolliersignal gebildet werden.

Im Folgenden ist die Erfindung beispielhaft anhand einer Ausführungsform mit Bezug auf die Zeichnung näher erläutert. Die bei der Ausführungsform beispielhaft dargestellte Merkmalskombination kann nach Maßgabe der obigen Ausführungen entsprechend der für einen bestimmten Anwendungsfall notwendigen Eigenschaften des erfindungsgemäßen Drehgebers durch weitere Merkmale ergänzt werden. Auch können, ebenfalls nach Maßgabe der obigen Ausführungen, einzelne Merkmale bei der beschriebenen Ausführungsform weggelassen werden, wenn es auf die Wirkung dieses Merkmals in einem konkreten Anwendungsfall nicht ankommt. In der Zeichnung werden für Elemente gleicher Funktion und/oder gleichen Aufbaus stets dieselben Bezugszeichen verwendet.

Es zeigt:

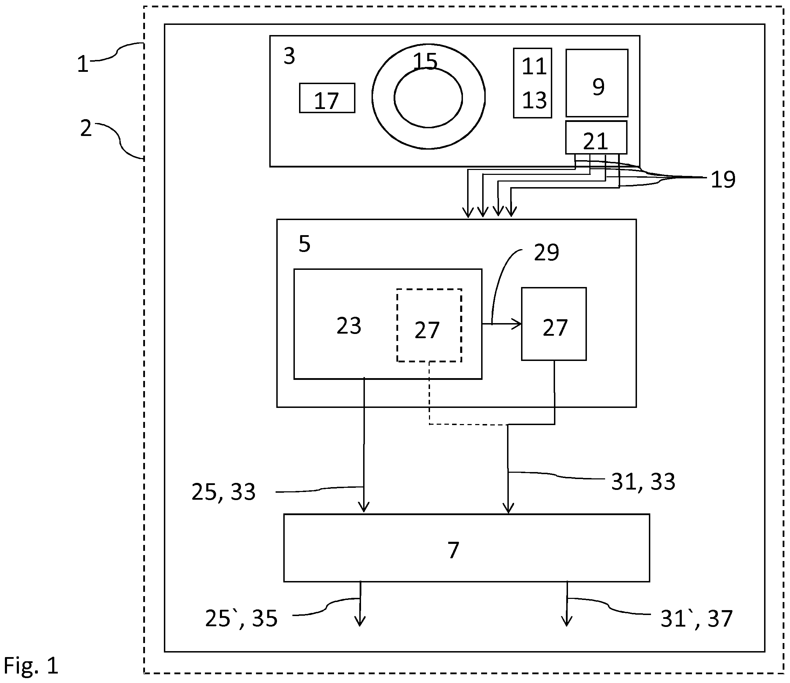

Fig. 1 ein schematisches Blockschaltbild eines erfindungsgemäßen Drehgebers.

Fig. 1 zeigt einen erfindungsgemäßen Drehgeber 1. Der Drehgeber 1 besitzt eine Sensoreinheit 3, eine Datenverarbeitungseinheit 5 und eine Ausgabeschnittstelle 7. Der Übersichtlichkeit halber sind nur die zur Beschreibung der erfindungsgemäßen Merkmale notwendigen Komponenten gezeigt.

Die Sensoreinheit 3, die Datenverarbeitungseinheit 5 und die Ausgabeschnittstelle 7 bilden eine Bauteilgruppe 2 und sind bevorzugt in einem gemeinsamen Gehäuse (nicht dargestellt) untergebracht.

Die Sensoreinheit 3 besitzt einen Sensor 9. Die Sensoreinheit 3 kann zudem eine Abtasteinheit 11 mit Abtastfenstern 13 aufweisen. Zur Sensoreinheit 3 kann auch eine Scheibe 15 mit Inkrementen (nicht gezeigt) und eine Lichtquelle 17 gehören. Die Erfindung ist jedoch nicht auf die gestrichelt dargestellte Kombination optischer Bauelemente 11, 15, 17 beschränkt. Ebenso könnten Inkremente einer mechanischen oder magnetischen Anordnung Bestandteil der Sensoreinheit 3 sein. Beispielhaft ist im Folgenden jedoch die Verwendung der optischen Komponenten beschrieben.

Die Maßverkörperung 15 ist bevorzugt auf einer Achse angeordnet, die mit der Achse eines Schienenfahrzeugs gekoppelt ist, um die Rotation der Achse des Schienenfahrzeugs auf die Scheibe 15 zu übertragen.

Der Sensor 9 kann Fotosensoren (nicht gezeigt) besitzen, welche das durch die Scheibe 15 und die Abtasteinheit 11 transmittierte Licht erfassen. Jeder Fotoempfänger des Sensors 9 erzeugt ein Rohsignal 19. Bevorzugt weist die Sensoreinheit 3 eine Abtasteinheit 11 mit vier Abtastfenstern 13 für die Rohsignale 19 auf. In der Regel besitzt die Abtasteinheit 11 wenigstens ein zusätzliches Abtastfenster (nicht gezeigt) für einen Nullindex. Auch für dieses nicht gezeigte Abtastfenster weist der Sensor 9 dann einen Fotoempfänger auf und erzeugt ein Signal für den Fotoempfänger. Diese Elemente wurden jedoch der Übersichtlichkeit halber in Fig. 1 weggelassen. Ebenso ist die Erfindung nicht auf die Verwendung von vier Abtastfenstern 13 und daraus erzeugten vier Rohsignalen 19 beschränkt. Diese Anzahl ist jedoch besonders vorteilhaft und dadurch beispielhaft in Fig. 1 gezeigt. Die vier Rohsignale 19 können durch einen Verstärker 21 in der Sensoreinheit 3 verstärkt werden.

Von der Sensoreinheit 3 werden die Rohsignale 19 an die Datenverarbeitungseinheit 5 geleitet. Die Datenverarbeitungseinheit 5 erzeugt aus den eingehenden Rohsignalen 19 zunächst ein digitalisiertes Rohsignal 29. Das Trennglied 23 ist dazu ausgestaltet, das Rolliersignal 25 von dem digitalisierten Rohsignal 29 zu trennen. Zur Erzeugung des Rolliersignals 25 aus den Rohsignalen 19 bzw. aus dem digitalisierten Rohsignal 29 kann das Trennglied 23 geeignete Filterelemente (nicht gezeigt) aufweisen. Geeignete Filterelemente sind beispielsweise ein Bandpass oder ein Tiefpass, oder eine Kombination aus beiden.

Zusätzlich zum Trennglied 23 kann die Datenverarbeitungseinheit 5 das Auswertungsglied 27 aufweisen. Das Trennglied 23 leitet bevorzugt das digitalisierte Rohsignal 29 an das Auswertungsglied 27 weiter. Das Auswertungsglied 27 synthetisiert das Inkrementalsignal 31 aus dem digitalisierten Rohsignal 29. Das Auswertungsglied 27 kann auch als Teil des Trenngliedes 23 gebildet sein, was einen besonders kompakten Aufbau ermöglicht. Dies ist in Fig. 1 gestrichelt dargestellt. Das Trennglied 23 stellt das Rolliersignal 25 separat vom Inkrementalsignal 31 bereit. Das Rolliersignal 25 wird über die Leitung 33 an die Ausgabeschnittstelle 7 übermittelt. Bevorzugt ist die Leitung 33, auf der das Rolliersignal 25 übermittelt wird, separat von weiteren Leitungen, welche beispielsweise das Inkrementalsignal 31 übermitteln, zu führen. Die Darstellung mit einer Leitung 33 für das Rolliersignal 25 ist lediglich beispielhaft. Das Rolliersignal 25 kann auch über mehrere Leitungen 33, beispielsweise für die Übermittlung unterschiedlicher "Rolliergrade", getrennt vom Inkrementalsignal 31 übermittelt werden.

Die Ausgabeschnittstelle 7 dient als Schnittstelle zur Übertragung wenigstens des Rolliersignals 25 und des Inkrementalsignals 31 nach außerhalb A des Drehgebers 1. Bevorzugt weist die Ausgabeschnittstelle 7 wenigstens einen separaten Ausgang 35 zur Bereitstellung eines aufbereiteten Rolliersignals 25' auf. Der separate Ausgang 35, welcher auch durch mehrere Leitungen gebildet sein kann, kann das Rolliersignal 25' beispielsweise über eine Feldbusschnittstelle oder Bit-kodiert zur Verfügung stellen.

Bevorzugt beinhaltet das Rolliersignal 25' die Amplitude und die Frequenz der periodischen Schwankungen der Drehzahl der Maßverkörperung 15 und damit beispielsweise der Achse eines Schienenfahrzeugs. Es ist aber ebenso denkbar, eine fertige "Rollierinformation" auszugeben, die lediglich signalisiert, dass der Zustand des Rollierens vorliegt. Am Ausgang 37 der Ausgabeschnittstelle 7 kann wenigstens das Inkrementalsignal 31 in einer zur Übertragung aufbereiteten Form 31' bereitgestellt werden. Der Ausgang 37 stellt bevorzugt ein Inkrementalsignal 31' zur Verfügung, wie es Inkrementaldrehgeber nach dem Stand der Technik ohne integrierte Rolliererkennung vermögen.

## Patentansprüche

1. An der Achse eines Schienenfahrzeugs montierbarer Drehgeber (1), mit einer Sensoreinheit (3) zur Erzeugung von die Rotation der Achse repräsentierenden Rohsignalen (19), wobei von dem Drehgeber Sinus- und Kosinussignale als Rohsignale (19) bereitgestellt und daraus eine hochaufgelöste Position und eine hochaufgelöste Drehzahl gewonnen werden, wobei in dem Drehgeber (1) eine Datenverarbeitungseinheit (5) vorgesehen ist, in der die Rohsignale (19) in digitalisierte Rohsignale umwandelbar sind, wobei aus den digitalisierten Rohsignalen Inkrementalsignale generierbar sind, welche über eine Ausgabeschnittstelle ausgebbar sind, **dadurch gekennzeichnet, dass** ein Trennglied (23) vorgesehen ist, wobei in dem Trennglied (23) mit der hochaufgelösten Position und mit der hochaufgelösten Drehzahl, die aus den Rohsignalen (19) berechenbar sind, aus den digitalisierten Rohsignalen Rolliersignale (25) separierbar sind und eine Ausgabeschnittstelle (7) zur separaten Ausgabe der Rolliersignale (25) und der Inkrementalsignale (31) integriert ist.

2. Drehgeber (1) nach Anspruch 1, **dadurch gekennzeichnet, dass** wenigstens eine separate Leitung (33) zur Übermittlung des Rolliersignals (25) zwischen der Datenverarbeitungseinheit (5) und der Ausgabeschnittstelle (7) vorgesehen ist.

3. Drehgeber (1) nach Anspruch 1 oder 2, **dadurch gekennzeichnet, dass** die Ausgabeschnittstelle (7) wenigstens einen separaten Ausgang (35) zur Ausgabe des Rolliersignals (25, 25') aufweist.

4. Drehgeber (1) nach Anspruch 3, **dadurch gekennzeichnet, dass** von dem separaten Ausgang (35) die Rolliersignale (25') über eine Feldbusschnittstelle oder Bit-kodiert verfügbar sind.

5. Drehgeber (1) nach Anspruch 4, **dadurch gekennzeichnet, dass** eine Information ausgebbar ist, welche signalisiert, dass der Zustand des Rollierens vorliegt

6. Drehgeber (1) nach einem der vorherigen Ansprüche, **dadurch gekennzeichnet, dass** die Datenverarbeitungseinheit (5) ein Auswertungsglied (27) zum Synthetisieren des Inkrementalsignals (31) aus dem oder den digitalen Rohsignal(en) (29) aufweist.

7. Drehgeber (1) nach einem der vorherigen Ansprüche, **dadurch gekennzeichnet, dass** ein integrierter Schaltkreis wenigstens das Trennglied (23) und das Auswertungsglied (27) beinhaltet.

8. Drehgeber (1) nach einem der vorherigen Ansprüche, **dadurch gekennzeichnet, dass** das Trennglied (23) wenigstens einen Tiefpass aufweist.

9. Drehgeber (1) nach einem der vorherigen Ansprüche, **dadurch gekennzeichnet, dass** das Trennglied (23) wenigstens einen Bandpass aufweist.

10. Achse für ein Schienenfahrzeug, **dadurch gekennzeichnet, dass** ein Drehgeber (1) nach einem der Ansprüche 1 bis 9 an dieser montiert ist.

11. Verfahren zur Erzeugung eines Rolliersignals in einem Drehgeber, **gekennzeichnet durch** die folgenden Schritte:
- Erzeugung von die Rotation der Achse repräsentierenden Sinus- und Kosinussignalen als Rohsignale (19) durch eine Sensoreinheit (3) und Gewinnung daraus einer hochaufgelösten Position und einer hochaufgelösten Drehzahl;
- Digitalisierung der Rohsignale (19) und Berechnung wenigstens eines digitalen Rohsignals (29) in einer Datenverarbeitungseinheit (5);
- Erzeugung eines Rolliersignals (25) und eines Inkrementalsignals (31) aus wenigstens einem digitalen Rohsignal (29),
- Trennung des Rolliersignals (25) vom digitalen Rohsignal (29) in wenigstens einer Signalverarbeitungseinheit (23), und
- separate Ausgabe des Inkrementalsignals (31) und des Rolliersignals (25) an einer Ausgabeschnittstelle (7) des Drehgebers (1).

12. Verfahren nach Anspruch 11, **gekennzeichnet durch** die Verwendung eines Drehgebers (1) nach einem der Ansprüche 1 bis 9.

## Claims

1. Encoder (1) that can be mounted on the axle of a rail vehicle, with a sensor unit (3) for the generation of raw signals (19) representing the rotation of the axle, whereby sine and cosine signals are provided by the encoder as raw signals (19) and from which a high-resolution position and a high-resolution rotational speed can be obtained, whereby a data processing unit (5) is provided for in the encoder (1) in which the raw signals (19) can be converted into digitized raw signals, whereby incremental signals can be generated from the digitized raw signals, whereby said incremental signals can be output via an output interface, **characterized in that** an interrupter (23) is provided for, whereby in the interrupter (23) with the high-resolution position and with the high-resolution speed, which can be calculated from the raw signals (19), torsional vibration signals (25) can be separated from the digitized raw signals and an output interface (7) is integrated for the separate output of the torsional vibration signals (25) and of the incremental signals (31).

2. Encoder (1) in accordance with Claim 1, **characterized in that** at least one separate conductor (33) is provided for the transmission of the torsional vibration signal (25) between the data processing unit (5) and the output interface (7).

3. Encoder (1) in accordance with Claim 1 or 2, **characterized in that** the output interface (7) has at least one separate output (35) to be used for the output of the torsional vibration signal (25, 25').

4. Encoder (1) in accordance with Claim 3, **characterized in that** from the separate output (35), the torsional vibration signals (25') are available either via a field bus interface or bit-coded.

5. Encoder (1) in accordance with Claim 4, **characterized in that** information can be output indicating that the condition of torsional vibration is present.

6. Encoder (1) in accordance with any one of the preceding claims, **characterized in that** the data processing unit (5) has an evaluation element (27) to synthesize the incremental signal (31) from the digital raw signal(s) (29).

7. Encoder (1) in accordance with any one of the preceding claims, **characterized in that** an integrated circuit contains at least the interrupter (23) and the evaluation element (27).

8. Encoder (1) in accordance with any one of the preceding claims, **characterized in that** the interrupter (23) has at least one low pass.

9. Encoder (1) in accordance with any one of the preceding claims, **characterized in that** the interrupter (23) has at least one bandpass.

10. Axle for a rail vehicle, **characterized in that** an encoder (1) is mounted on it in accordance with any one of Claims 1 to 9.

11. Process for generating a torsional vibration signal in an encoder, **characterized by** the following steps:
- Generation of the sine and cosine signals representing the rotation of the axle as raw signals (19) by a sensor unit (3) and from this the generation of a high-resolution position and a high-resolution rotational speed;
- Digitization of the raw signals (19) and calculation of at least one digital raw signal (29) in a data processing unit (5);
- Generation of a torsional vibration signal (25) and of an incremental signal (31) from at least one digital raw signal (29),
- Separation of the torsional vibration signal (25) from the digital raw signal (29) in at least one signal processing unit (23), and
- Separate output of the incremental signal (31) and of the torsional vibration signal (25) to an output interface (7) of the encoder (1).

12. Process in accordance with Claim 11, **characterized by** the use of an encoder (1) in accordance with any one of Claims 1 to 9.

## Revendications

1. Codeur (1) montable sur l'axe d'un véhicule ferroviaire avec une unité de détecteur (3) pour la génération de signaux bruts (19) représentant la rotation de l'axe, des signaux sinus et cosinus étant mis à disposition par le codeur sous forme de signaux bruts (19) et une position à haute résolution ainsi qu'une vitesse de rotation à haute résolution étant ainsi obtenues, une unité de traitement des données (5) étant prévue dans le codeur (1) dans laquelle les signaux bruts (19) sont transformés en signaux bruts numériques, des signaux incrémentaux pouvant être générés à partir des signaux bruts numériques qui peuvent être sortis via une interface de sortie **caractérisé en ce qu'**un élément séparateur (23) est prévu, une position à haute résolution et une vitesse de rotation à haute résolution étant dans l'élément séparateur (23) qui sont prévisibles à partir des signaux bruts (19), des signaux de roulage (25) pouvant être séparés des signaux bruts numériques et une interface de sortie (7) étant intégrée pour la sortie séparée des signaux de roulage (25) et des signaux incrémentaux (31).

2. Codeur (1) selon la revendication 1 **caractérisé en ce qu'**au moins une ligne (33) séparée est prévue pour la transmission du signal de roulage (25) entre l'unité de traitement des données (5) et l'interface de sortie (7).

3. Codeur (1) selon la revendication 1 ou 2 **caractérisé en ce que** l'interface de sortie (7) présente au moins une sortie (35) séparée pour sortir le signal de roulage (25, 25').

4. Codeur (1) selon la revendication 3 **caractérisé en ce que,** depuis la sortie (35) séparée, les signaux de roulage (25') sont disponibles via une interface bus de terrain ou codée bit.

5. Codeur (1) selon la revendication 4 **caractérisé en ce qu'**une information peut être sortie qui signale que l'état du roulage est disponible.

6. Codeur (1) selon l'une des revendications précédentes **caractérisé en ce que** l'unité de traitement des données (5) présente un élément d'évaluation (27) pour synthétiser le signal incrémental (31) du signal brut ou des signaux bruts (29).

7. Codeur (1) selon l'une des revendications précédentes **caractérisé en ce qu'**un circuit de commutation intégré comprend au moins l'élément séparateur (23) et l'élément d'évaluation (27).

8. Codeur (1) selon l'une des revendications précédentes **caractérisé en ce que** l'élément séparateur (23) présente au moins un passe-bas.

9. Codeur (1) selon l'une des revendications précédentes **caractérisé en ce que** l'élément séparateur (23) présente au moins un passe-bande.

10. Axe pour un véhicule ferroviaire **caractérisé en ce qu'**un codeur (1) est monté dessus selon une des revendications 1 à 9.

11. Procédure pour la génération d'un signal de roulage dans un codeur **caractérisée par** les étapes suivantes :
- génération de signaux sinus et cosinus représentant la rotation de l'axe sous forme de signaux bruts (19) par une unité de détecteur (3) et ainsi obtention d'une position à haute résolution et d'une vitesse de rotation à haute résolution ;
- numérisation des signaux bruts (19) et calcul d'au moins un signal brut numérique (29) dans une unité de traitement des données (5) ;
- génération d'un signal de roulage (25) et d'un signal incrémental (31) à partir d'au moins un signal brut numérique (29),
- séparation du signal de roulage (25) du signal brut numérique (29) dans au moins une unité de traitement des signaux (23), et
- sortie séparée du signal incrémental (31) et du signal de roulage (25) à une interface de sortie (7) du codeur (1).

12. Procédure selon la revendication 11 **caractérisée par** l'utilisation d'un codeur (1) selon une des revendications 1 à 9.
